(19) Europäisches Patentamt / European Patent Office / Office européen des brevets

(11) **EP 4 752 969 A1**

(12) **EUROPEAN PATENT APPLICATION**

(43) Date of publication:
03.06.2026 Bulletin 2026/23

(21) Application number: 25219140.8

(22) Date of filing: 27.11.2025

(51) International Patent Classification (IPC):
$H01M\ 4/36^{(2006.01)}$    $H01M\ 4/133^{(2010.01)}$
$H01M\ 4/134^{(2010.01)}$    $H01M\ 4/38^{(2006.01)}$
$H01M\ 4/587^{(2010.01)}$    $H01M\ 4/62^{(2006.01)}$

(52) Cooperative Patent Classification (CPC):
H01M 4/366; H01M 4/133; H01M 4/134;
H01M 4/364; H01M 4/386; H01M 4/587;
H01M 4/625; H01M 10/0525; H01M 2004/021;
H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.11.2024 KR 20240175708
29.11.2024 KR 20240175710

(71) Applicant: SAMSUNG SDI CO., LTD.
Yongin-si, Gyeonggi-do 17084 (KR)

(72) Inventors:
• Cho, Hang In
16678 Gyeonggi-do, Suwon-si (KR)
• Oh, Se Young
16678 Gyeonggi-do, Suwon-si (KR)
• Cha, Yu Rim
16678 Gyeonggi-do, Suwon-si (KR)
• Yu, So Jeong
16678 Gyeonggi-do, Suwon-si (KR)
• Shin, Ga In
16678 Gyeonggi-do, Suwon-si (KR)
• Moon, Dong Min
16678 Gyeonggi-do, Suwon-si (KR)
• Kim, Min Kyeong
16678 Gyeonggi-do, Suwon-si (KR)

(74) Representative: Meissner Bolte Partnerschaft
mbB
Patentanwälte Rechtsanwälte
Postfach 86 06 24
81633 München (DE)

(54) **NEGATIVE ELECTRODE PLATE FOR RECHARGEABLE LITHIUM BATTERY AND RECHARGEABLE LITHIUM BATTERY INCLUDING NEGATIVE ELECTRODE PLATE**

(57) A negative electrode plate for a rechargeable lithium battery may include a negative electrode active material, which may include a first, second, and a third negative electrode active material. The first negative electrode active material may include natural graphite and a coating layer. The natural graphite may include secondary particles. The secondary particles may include an assembly of primary particles. The coating layer may include amorphous carbon and surrounds the secondary particles of the natural graphite. The first negative electrode active material may have an orientation of 90 or less and may have a d002 ranging from about 3.356 Å to about 3.360 Å. The second negative electrode active material may include graphite. The third negative electrode active material may have a sphericity from about 0.9 to about 1.0 and may include silicon nanoparticles and an amorphous carbon coating layer disposed on a surface of the silicon nanoparticles.

FIG. 1.

EP 4 752 969 A1

**Description**

**BACKGROUND**

**1. Field of the Invention**

The present invention relates to a negative electrode plate for a rechargeable lithium battery and a rechargeable lithium battery including the negative electrode plate.

**2. Discussion of Related Art**

Recently, with the rapid spread of electronic devices, such as mobile phones, notebook computers, and electric vehicles, using batteries, the demand for secondary batteries having high energy density and high capacity is rapidly increasing. Therefore, research and development for improving a performance of rechargeable lithium batteries is actively being conducted.

A rechargeable lithium battery is a battery including a positive electrode and a negative electrode, which each contains an active material capable of the intercalation and deintercalation of lithium ions and produces electric energy by oxidation and reduction reactions when the lithium ions are intercalated into and deintercalated from the positive electrode and the negative electrode.

**SUMMARY**

The present invention is directed to providing a negative electrode plate for a rechargeable lithium battery, which exhibits high energy density, boosts charging, and provides a long life cycle for the rechargeable lithium battery.

The present invention is also directed to providing a negative electrode plate for a rechargeable lithium battery, which exhibits improved expansion characteristics.

The present invention is also directed to providing a rechargeable lithium battery including the negative electrode plate.

A negative electrode plate for a rechargeable lithium battery according to the present disclosure includes a negative electrode active material. The negative electrode active material may include a first negative electrode active material, a second negative electrode active material, and a third negative electrode active material. The first negative electrode active material may include secondary particles and a coating layer. The secondary particles may include natural graphite. The secondary particles may be an assembly of primary particles. The first coating layer may include amorphous carbon. The first coating layer may surround each of the secondary particles. The first negative electrode active material may have an orientation degree of 90 or less and may have a d002 ranging from about 3.356 Å to about 3.360 Å. The second negative electrode active material may include graphite. The third negative electrode active material may have a sphericity from about 0.9 to about 1.0. The third negative electrode active material may include silicon nanoparticles and a second coating layer including amorphous carbon. The second coating layer may surround each of the silicon nanoparticles.

In some embodiments, the first negative electrode active material may have a Hg cumulative pore volume from about 0.01 mL/g to about 0.06 mL/g.

In some embodiments, the first negative electrode active material may have a pellet density from about 1.60 g/cc to about 1.80 g/cc.

In some embodiments, the first negative electrode active material may have a sphericity of greater than or equal to 0.85.

In some embodiments, a ratio of a major axis length of the primary particles to an average particle size D50 of the secondary particles may be from about 2 to about 10.

In some embodiments, each of the primary particles may have a flaky geometry, and each of the secondary particles may have a substantially spherical geometry.

In some embodiments, a major axis length of each of the primary particles ranges from about 10 $\mu$m to about 200 $\mu$m.

In some embodiments, an average particle size D50 of the secondary particles may be less than or equal to about 30 $\mu$m.

In some embodiments, the first negative electrode active material may further include a third coating layer including amorphous carbon, the third coating layer surrounding each of the primary particles.

In some embodiments, the amorphous carbon may include soft carbon, hard carbon, mesophase pitch carbide, or calcined coke.

In some embodiments, a weight ratio between natural graphite and the amorphous carbon in the first negative electrode active material is from about 90:10 to about 75:25 with respect to 100 parts by weight of a total of natural graphite and the amorphous carbon in the first negative electrode active material.

In some embodiments, the third negative electrode active material may have pores including mesopores.

In some embodiments, a percent ratio of a mesopore volume to a total pore volume of the third negative electrode active material may be from about 30% to about 70%.

In some embodiments, a span value may be expressed by the following equation: Span = (D90-D10)/D50. D10 may be a particle size of particles of the third negative electrode active material with a cumulative volume of about 10 vol% in a particle size distribution of the third negative electrode active material. D50 may be an average particle size of particles of the third negative electrode active material with a cumulative volume of about 50 vol% in the particle size distribution. D90 may be the particle size of particles of the third negative electrode active material with a cumulative volume of about 90 vol% in the particle size distribution. The third negative electrode active material may have a span value from about 1.1 to about 1.6.

In some embodiments, the third negative electrode active material may include the silicon nanoparticles in an amount from about 55 wt% to about 64 wt% with respect to a total of 100 wt% of the third negative electrode active material. The third negative electrode active material may include the amorphous carbon in an amount from about 36 wt% to about 45 wt% with respect to a total of 100 wt% of the third negative electrode active material.

In some embodiments, the third negative electrode active material may further include a polymer layer surrounding the second coating layer.

In some embodiments, the polymer layer may include polyvinyl alcohol or polyacrylic acid.

In some embodiments, the negative electrode active material may include the first negative electrode active material in an amount from about 20 wt% to about 75 wt% of the negative electrode active material, the second negative electrode active material in an amount from about 20 wt% to about 75 wt% of the negative electrode active material, and the third negative electrode active material in an amount from about 1 wt% to about 20 wt% of the negative electrode active material.

In some embodiments, graphite of the second negative electrode active material may be artificial graphite having an average particle size D50 from about 10 $\mu$m to about 20 $\mu$m, a pellet density from about 1.1 g/cc to about 1.6 g/cc, a specific surface area less than or equal to about 10 m$^2$/g, and an orientation degree greater than or equal to about 90.

In some embodiments, the negative electrode plate may further include a conductive material.

In some embodiments, the conductive material may include carbon nanotubes.

In some embodiments, the negative electrode plate may include the conductive material in an amount from about 0.01 wt% to about 5 wt% of the negative electrode plate.

A rechargeable lithium battery according to some embodiments of the present disclosure includes the negative electrode plate as described above and a positive electrode.

The negative electrode plate for a rechargeable lithium battery according to some embodiments of the present disclosure may simultaneously achieve a high energy density, a long life cycle, a boost charging effect, and improved expansion characteristics, and excellent performance for a rechargeable lithium battery.

## BRIEF DESCRIPTION OF THE DRAWINGS

The drawings illustrate embodiments of the present disclosure and, together with the detailed description of the present disclosure, further describe aspects and features of the present disclosure. Accordingly, the present disclosure should not be construed as being limited to the drawings.

FIG. 1 is a schematic diagram of a first negative electrode active material according to some embodiments of the present disclosure.
FIG. 2 is a cross-sectional view schematically illustrating a rechargeable lithium battery according to some embodiments of the present disclosure.
FIG. 3 is a cross-sectional view schematically illustrating a rechargeable lithium battery according to some embodiments of the present disclosure.
FIG. 4 is a cross-sectional view schematically illustrating a rechargeable lithium battery according to some embodiments of the present disclosure.
FIG. 5 is a cross-sectional view schematically illustrating a rechargeable lithium battery according to some embodiments of the present disclosure.

## DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C", "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Unless otherwise specified herein, when a part such as a layer, a film, an area, or a plate is said to be "on" another part, it includes not only the case where it is "directly on" the other part, but also the case where another part is present therebetween.

The phrase "a combination thereof" may mean a mixture, a laminate, a composite, a copolymer, an alloy, a blend, and a reaction product of the components.

Unless otherwise defined herein, the particle size may be an average particle size. In addition, the particle size refers to the average particle size D50, which is the diameter of particles with a cumulative volume of 50 vol% in the particle size distribution. The average particle size D50 may be measured by a well-known method to those skilled in the art, for example, using a particle size analyzer, a transmission electron micrograph, or a scanning electron micrograph. As another method, the average particle size may be measured using a measurement device using dynamic light scattering, and an average particle size D50 value may be obtained by performing data analysis, counting the number of particles in each particle size range, and then calculating the D50 value therefrom. Alternatively, the average particle size may be measured using a laser diffraction method. When measuring the average particle size by the laser diffraction method, more specifically, the average particle size D50 may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz at an output of about 60 W.

When the particle is spherical, the size may mean a diameter.

In this specification, "size" is the diameter when the cross-section of the measurement object is circular, and "size" is the length of the longest axis of the cross-section when the cross-section of the measurement object is not circular.

In this specification, particle size "D10" refers to the particle size of particles having a cumulative volume of 10% by volume in the particle size distribution. In this specification, particle size "D90" refers to the particle size of particles having a cumulative volume of 90% by volume in the particle size distribution. "D10" and "D90" can each be obtained using the method of measuring the D50 value described above.

Particle size can be evaluated using a particle size analyzer (Beckman Coulter, LS 13 320 XR).

The terms used in this specification are for describing embodiments of the present disclosure and are not intended to limit the scope of the disclosure.

A negative electrode plate for a rechargeable lithium battery according to some embodiments may simultaneously provide a long life cycle, high energy density, a boost charging effect, and improved expansion characteristics.

An "orientation degree" used herein may refer to the ratio of the diffraction peak intensity I (002) of the (002) plane to the diffraction peak intensity I (110) of the (110) plane, as measured by X-ray diffraction analysis using Cu K$\alpha$ radiation.

The "d002" used herein may refer to the interplanar spacing of the (002) plane of the first negative electrode active material, as measured by X-ray diffraction analysis using Cu K$\alpha$ radiation.

The negative electrode plate for a rechargeable lithium battery according to some embodiments includes a negative electrode active material. The negative electrode active material may include a mixture of a first negative electrode active material, a second negative electrode active material, and a third negative electrode active material, wherein the first negative electrode active material may include natural graphite that includes secondary particles in which primary particles are assembled and a coating layer that surrounds the secondary particles and contains amorphous carbon, and the first negative electrode active material has an orientation degree of about 90 or less and a d002 ranging from about 3.356 Å to about 3.360 Å. The second negative electrode active material may be graphite, and the third negative electrode active material may include silicon nanoparticles and an amorphous carbon coating layer disposed on the surface of the silicon nanoparticles and may have a sphericity from about 0.9 to about 1.0.

The negative electrode plate for a rechargeable lithium battery may include the mixture as a negative electrode active material, thereby providing high capacity retention, high energy density, a boost charging effect, a fast charging life cycle enhancement effect, and a low expansion rate (swelling).

In some embodiments, the mixture may include 95 wt% or more, for example, from 95 wt% to about 100 wt%, from about 99 wt% to about 100 wt%, or about 100 wt% of the total negative electrode active material in the electrode plate. Within the above ranges, the above-mentioned effects of the electrode plate may be achieved.

In some embodiments, the negative electrode active material may be included in an amount, for example, from about 90 wt% to about 99.5 wt%, for example, from about 95 wt% to about 99.5 wt%, from about 90 wt% to about 99 wt% of the negative electrode plate. Within the above ranges, an improved battery capacity may be achieved.

When there is no first negative electrode active material in the mixture, due to low electrode plate density, it can be difficult to implement a cell with high energy density, and a boost charging effect may be degraded.

When there is no second negative electrode active material in the mixture, an effect of a long life cycle can be reduced in a high temperature environment.

When there is no third negative electrode active material in the mixture, an increase in capacity per volume may decrease.

In some embodiments, in the mixture of the first negative electrode active material, the second negative electrode active material, and the third negative electrode active material, the first negative electrode active material may be included at from about 20 wt% to about 75 wt%, for example, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt%, 61 wt%, 62 wt%, 63 wt%, 64 wt%, 65 wt%, 66 wt%, 67 wt%, 68 wt%, 69 wt%, 70 wt%, 71 wt%, 72 wt%, 73 wt%, 74 wt%, or 75 wt%, or, for example, from about 20 wt% to about 65 wt%, from about 20 wt% to about 60 wt%, or from about 23 wt% to about 75 wt%; the second negative electrode active material may be included at from about 20 wt% to about 75 wt%, for example, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt%, 61 wt%, 62 wt%, 63 wt%, 64 wt%, 65 wt%, 66 wt%, 67 wt%, 68 wt%, 69 wt%, 70 wt%, 71 wt%, 72 wt%, 73 wt%, 74 wt%, or 75 wt%, or, for example, from about 20 wt% to about 65 wt%, from about 20 wt% to about 60 wt%, or from about 23 wt% to about 75 wt%; and the third negative electrode active material may be included from about 1 wt% to about 20 wt%, for example, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, or 20 wt%, or, for example, from about 1 wt% to about 15 wt%, from about 1 wt% to about 14 wt%, from about 1 wt% to about 10 wt%, or from about 5 wt% to about 7 wt%. Within the above ranges, high energy density and a boost charging effect can be provided, and a fast charging life cycle can be further improved.

In some embodiments, in the mixture, the total of the first negative electrode active material and the second negative electrode active material may be from about 85 wt% to about 99 wt%, for example, 85 wt%, 86 wt%, 87 wt%, 88 wt%, 89 wt%, 90 wt%, 91 wt%, 92 wt%, 93 wt%, 94 wt%, 95 wt%, 96 wt%, 97 wt%, 98 wt%, or 99 wt%, or, for example, from about 86 wt% to about 99 wt%, or from about 90 wt% to about 99 wt%, and the third negative electrode active material may be from about 1 wt% to about 15 wt%, for example, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, or 15 wt%, or, for example, from about 1 wt% to about 14 wt%, or from about 1 wt% to about 10 wt%. Within the above ranges, a boost charging effect and a fast charging life cycle improvement effect can be achieved.

In some embodiments, the third negative electrode active material may be included with a specific capacity of about 500 mAh/g or less.

Based on 100 parts by weight of the total of the first negative electrode active material and the second negative electrode active material, a weight ratio of the first negative electrode active material to the second negative electrode active material may be from about 10:90 to about 90:10, for example, from about 25:75 to about 75:25, from about 40:60 to about 60:40, or about 50:50. Within the above ranges, a boost charging effect and/or an improved fast charging life cycle effect can be achieved.

In some embodiments, a density of the negative electrode plate may be from about 1.3 g/cc to about 1.7 g/cc, for example, from about 1.3 g/cc to about 1.68 g/cc. Within the above ranges, high energy density can be achieved, and boost charging may be facilitated.

**First negative electrode active material**

A first negative electrode active material may include natural graphite including secondary particles in which primary particles are assembled and a coating layer that surrounds the secondary particles and contains amorphous carbon, and the negative electrode active material may have an orientation degree of about 90 or less and a d002 from about 3.356 Å to about 3.360 Å.

Generally, natural graphite has advantages as a negative electrode active material for a battery, but its high resistance results in poor charging characteristics. Additionally, due to a large number of internal pores in natural graphite, side reactions may adversely affect the extended life cycle and expansion rate.

The first negative electrode active material may be prepared by significantly reducing an average particle diameter of secondary particles of natural graphite into a fine particle form so as to provide low resistance, and in order to offset a reduction in efficiency caused by an increased specific surface area of the secondary particles, the first negative electrode active material is calcined at the temperature described below, thereby reducing the specific surface area of the first negative electrode active material and simultaneously providing high efficiency for the first negative electrode active material.

The first negative electrode active material includes the natural graphite, the amorphous carbon, and the coating layer, and satisfies the above orientation degree and d002. Through this, the first negative electrode active material improves the capacity of a battery and significantly increases a charge C-rate, thereby increasing the boost charging performance of the rechargeable lithium battery. Although the first negative electrode active material includes natural graphite, it can significantly reduce resistance, and provide high energy density, suppression of side reactions with the electrolyte, and an improved lifespan.

As the orientation degree decreases, the edge planes of natural graphite become oriented in random directions, thereby increasing the random orientation of the negative electrode active material. Accordingly, this facilitates the intercalation and deintercalation of lithium ions into the natural graphite secondary particles, thereby improving the capacity characteristics of a rechargeable lithium battery. The orientation degree may be about 80 or less, for example, about 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80, or, for example, from about 10 to about 80, from about 20 to about 80, from about 30 to about 80, from about 40 to about 80, or from about 50 to about 80. The orientation degree may be obtained by adjusting the average particle size D50 of the secondary particles and the major axis length of the primary particles. In the first negative electrode active material, the average particle size D50 of the secondary particles may be significantly reduced to reduce the high resistance of natural graphite.

The average particle size D50 of the secondary particles in the first negative electrode active material is significantly less than the major axis length of the primary particles. The secondary particles may be produced by crumpling the primary particles. The first negative electrode active material may include amorphous carbon and may be produced by thermal treatment at 2500°C or more as described below, thereby achieving a high degree of graphitization. A high degree of graphitization may contribute to improving the capacity of the negative electrode active material, and preventing a decrease in efficiency caused by a reduction in the low average particle diameter of secondary particles and an increase in the specific surface area. The d002 of the first negative electrode active material is from about 3.356 Å to about 3.360 Å. Within the above range, the decrease in battery efficiency caused by the increase in specific surface area of the first negative electrode active material including the secondary particles having a relatively small average particle size D50 can be offset and high capacity can be provided. The d002 may be 3.356 Å, 3.3561 Å, 3.3562 Å, 3.3563 Å, 3.3564 Å, 3.3565 Å, 3.3566 Å, 3.3567 Å, 3.3568 Å, 3.3569 Å, 3.357 Å, 3.3571 Å, 3.3572 Å, 3.3573 Å, 3.3574 Å, 3.3575 Å, 3.3575 Å, 3.3576 Å, 3.3577 Å, 3.3578 Å, 3.3579 Å, 3.358 Å, 3.3581 Å, 3.3582 Å, 3.3583 Å, 3.3584 Å, 3.3585 Å, 3.3586 Å, 3.3587 Å, 3.3588 Å, 3.3589 Å, 3.359 Å, 3.3591 Å, 3.3592 Å, 3.3593 Å, 3.3594 Å, 3.3595 Å, 3.3596 Å, 3.3597 Å, 3.3598 Å, 3.3599 Å, or 3.360 Å.

According to some embodiments, the first negative electrode active material may have a Hg cumulative pore volume from about 0.01 mL/g to about 0.06 mL/g, for example, 0.01 mL/g, 0.02 mL/g, 0.03 mL/g, 0.04 mL/g, 0.05 mL/g, or 0.06 mL/g, or, for example, form about 0.02 mL/g to about 0.06 mL/g or from about 0.03 mL/g to about 0.06 mL/g. Within the above ranges, due to small pores-that is, voids-in the first negative electrode active material and the appropriate amount of the amorphous carbon in the first negative electrode active material, significantly greater negative electrode active material efficiency can be achieved. In addition, the internal area of the first negative electrode active material where the reaction with the electrolyte occurs is not excessively large and maintains a sufficient density that allows the electrolyte to be well impregnated, thereby ensuring an appropriate lifespan without excessive side reactions. The Hg cumulative pore volume may be a characteristic of the negative electrode active material prepared by a preparation method to be described below to reduce the specific surface area while including small particles of natural graphite.

According to some embodiments, the first negative electrode active material may have a sphericity (S) of 0.85 or more according to Equation 1 below:

[Equation 1]

$$\text{Sphericity (S)} = 4\pi \times A/B^2.$$

In Equation 1, A is the area of the first negative electrode active material, and B is the perimeter of the first negative electrode active material.

In some embodiments, B may be the perimeter of the actual geometry of the first negative electrode active material.

The sphericity of the first negative electrode active material may be a value obtained when projecting a three-dimensional particle onto a two-dimensional plane. The sphericity may be the ratio of the outline of a real particle and the outline of the circle with the same area as the real one.

In Equation 1, the area A indicates the area of a circle with a circumference, which is the same as the actual perimeter B of particles that has been obtained through the SEM image of an electrode cross-section using a controlled pressure scanning electron microscope (CP-SEM) and calculating the actual perimeter of the particle from the cross-sectional image through the Image J program. In some embodiments, the actual perimeter may refer not only to the perimeter when the particle has a perfectly spherical geometry, but also the length obtained along the perimeter even when the particle is not perfectly spherical and has uneven regions.

The sphericity of the first negative electrode active material may be 0.85, 0.86, 0.87, 0.88, 0.89, 0.90, 0.91, 0.92, 0.93, 0.94, 0.95, 0.96, 0.97, 0.98, 0.99, 1.0, from about 0.90 to about 1.0, from about 0.90 to about 0.98, or from about 0.90 to about 0.95. When the sphericity falls within the above ranges, the expansion rate during charging and discharging may be more effectively inhibited.

The first negative electrode active material may have a pellet density from about 1.60 to about 1.80 g/cc. Within the above ranges, the internal pores and side reactions with the electrolyte of the first negative electrode active material can be reduced, thereby improving lifespan characteristics. The pellet density may be about 1.60 g/cc, 1.61 g/cc, 1.62 g/cc, 1.63 g/cc, 1.64 g/cc, 1.65 g/cc, 1.66 g/cc, 1.67 g/cc, 1.68 g/cc, 1.69 g/cc, 1.70 g/cc, 1.71 g/cc, 1.72 g/cc, 1.73 g/cc, 1.74 g/cc, 1.75 g/cc, 1.76 g/cc, 1.77 g/cc, 1.78 g/cc, 1.79 g/cc, 1.80 g/cc, or, for example, from about 1.70 g/cc to about 1.80 g/cc.

The first negative electrode active material may have a tap density from about 0.75 g/cc to about 1.20 g/cc, for example, 0.75 g/cc, 0.76 g/cc, 0.77 g/cc, 0.78 g/cc, 0.79 g/cc, 0.80 g/cc, 0.81 g/cc, 0.82 g/cc, 0.83 g/cc, 0.84 g/cc, 0.85 g/cc, 0.86 g/cc, 0.87 g/cc, 0.88 g/cc, 0.89 g/cc, 0.90 g/cc, 0.91 g/cc, 0.92 g/cc, 0.93 g/cc, 0.94 g/cc, 0.95 g/cc, 0.96 g/cc, 0.97 g/cc, 0.98 g/cc, 0.99 g/cc, 1.00 g/cc, 1.01 g/cc, 1.02 g/cc, 1.03 g/cc, 1.04 g/cc, 1.05 g/cc, 1.06 g/cc, 1.07 g/cc, 1.08 g/cc, 1.09 g/cc, 1.10 g/cc, 1.11 g/cc, 1.12 g/cc, 1.13 g/cc, 1.14 g/cc, 1.15 g/cc, 1.16 g/cc, 1.17 g/cc, 1.18 g/cc, 1.19 g/cc, 1.20 g/cc g/cc, or for example, from about 0.75 g/cc to about 1.0 g/cc or from about 0.95 g/cc to about 1.20 g/cc. Within the above ranges, the internal pores and side reactions with the electrolyte of the first negative electrode active material can be reduced, and lifespan characteristics can be improved. The tap density may be obtained by calculating a mean value by performing a process of applying a pressure of 108N three times using a GeoPyc 1360 Pycnometer (Micromeritics) having a conversion factor of 0.2907 cm$^3$/mm and a chamber with a diameter of 19.1 mm.

The first negative electrode active material may have a specific surface area of 10 m$^2$/g or less, for example, 1 m$^2$/g, 1.5 m$^2$/g, 2 m$^2$/g, 2.5 m$^2$/g, 3 m$^2$/g, 3.5 m$^2$/g, 4 m$^2$/g, 4.5 m$^2$/g, 5 m$^2$/g, 5.5 m$^2$/g, 6 m$^2$/g, 6.5 m$^2$/g, 7 m$^2$/g, 7.5 m$^2$/g, 8 m$^2$/g, 8.5 m$^2$/g, 9 m$^2$/g, 9.5 m$^2$/g, 10 m$^2$/g, from about 1 m$^2$/g to about 10 m$^2$/g. Within the above ranges, side reactions of the internal pores of the first negative electrode active material with the electrolyte can be reduced and lifespan characteristics can be improved. The specific surface area may be a BET specific surface area. The BET specific surface area may be measured using Macsorb HM Model-1208 (MOUNTECH).

The internal porosity of the first negative electrode active material may be about 2% or less, for example, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2%, or, for example, about 1.8% or less, about 1.5% or less, from about 1.0% to about 1.5%, or from about 1.0% to about 1.3%. Within the above ranges, side reactions of the first negative electrode active material with the electrolyte can be inhibited, thereby improving the lifespan of the rechargeable lithium battery. The total pore volume and mesopore volume of the porosity may be quantitatively measured using Barrett-Joyner-Halenda (BJH) analysis equipment.

The first negative electrode active material includes natural graphite containing secondary particles in which primary particles are assembled; and a coating layer that surrounds the secondary particle and includes amorphous carbon.

The natural graphite may be flaky (i.e., with a needle geometry or a scale geometry) natural graphite.

The primary particles may have a major axis length from about 10 μm to about 200 μm, for example, about 10 μm, 15 μm, 20 μm, 25 μm, 30 μm, 35 μm, 40 μm, 45 μm, 50 μm, 55 μm, 60 μm, 65 μm, 70 μm, 75 μm, 80 μm, 85 μm, 90 μm, 95 μm, 100 μm, 105 μm, 110 μm, 115 μm, 120 μm, 125 μm, 130 μm, 135 μm, 140 μm, 145 μm, 150 μm, 155 μm, 160 μm, 165 μm, 170 μm, 175 μm, 180 μm, 185 μm, 190 μm, 195 μm, or 200 μm, or, for example, from about 10 μm to about 100 μm, from about 30 μm to about 60 μm, or from about 20 μm to about 50 μm. Within the above ranges, the assembly into secondary particles can be easily performed, and the secondary particles can easily achieve a ratio to be described below.

"Major axis length" refers to the length of the longest axis between facing sides when the primary particles are formed in a geometry of a plate.

In some embodiments, the primary particles may be formed in a geometry of a plate, but the present invention is not limited thereto.

The average particle size D50 of the secondary particles may be about 30 μm or less. Within the above range, the secondary particles can easily achieve a ratio to be described below. The average particle size D50 of the secondary particles may be from about 5 μm to about 10 μm, for example, about 5 μm, 6 μm, 7 μm, 8 μm, 9 μm, or 10 μm, or, for example, from about 6 μm to about 8 μm. Within the above ranges, the secondary particles can easily achieve the above orientation degree and sphericity.

The secondary particles may be spherical, but the present invention is not limited thereto.

In some embodiments, the ratio of the major axis length of the primary particles to the average particle size D50 of the secondary particles may be greater than 2 and 10 or less. Within the above range, the resistance of the active material cannot increase, and boost charging performance cannot be reduced. The ratio may be 2.1, 2.5, 3, 3.5, 4, 4.5, *5, 5.5, 6, 6.5,* 7, 7.5, 8, 8.5, 9, 9.5, 10, from 3 to 6, from 4 to 6, or from 5 to 6. Within the above ranges, the secondary particles can easily achieve the above orientation degree and sphericity.

The amorphous carbon may be contained in the coating layer surrounding the surface of the secondary particle. The amorphous carbon may reduce the internal porosity of the negative electrode active material and inhibit side reactions of the negative electrode active material with the electrolyte, thereby improving charge and discharge rate characteristics.

The thickness of the coating layer containing the amorphous carbon may be 5 to 50 nm, for example, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, 30 nm, 31 nm, 32 nm, 33 nm, 34 nm, 35 nm, 36 nm, 37 nm, 38 nm, 39 nm, 40 nm, 41 nm, 42 nm, 43 nm, 44 nm, 45 nm, 46 nm, 47 nm, 48 nm, 49 nm, 50 nm, from about 10 nm to about 50 nm, or from about 20 nm to about 50 nm. Within the above ranges, side reactions with the electrolyte can be inhibited, and charge and discharge rate characteristics can be improved.

The amorphous carbon may be a mixture of one or more of soft carbon, hard carbon, mesophase pitch carbide, and calcined coke.

The amorphous carbon may be additionally present even on the surface of the primary particle.

The natural graphite and the amorphous carbon may be included in a weight ratio from about 90:10 to about 75:25, for example, from about 90:10 to about 80:20, from about 90:10 to about 85:15, or from about 90:10 to about 88:12 with respect to 100 parts by weight of the total of the natural graphite and the amorphous carbon in the first negative electrode active material. Within the above ranges, side reactions with the electrolyte can be inhibited, and charge and discharge rate characteristics can be improved.

Primary particles having the above major axis length were obtained by grinding a natural graphite raw material having an average particle size D50 of about 120 μm or more. In some embodiments, the natural graphite raw material may be ground by applying an air jet milling method. The air jet milling may include grinding the natural graphite raw material at room temperature under a condition of 5 to 20 kg/cm$^2$.

The primary particles are assembled into secondary particles using spheroidization equipment.

The assembly is a process of reaching a sphericity of 0.85 or more and may be achieved using a high-strength mixer equipped with a high-speed rotating rotor and a stator. In the spheroidization process, the average particle size D50 of the secondary particles can be adjusted by varying a pressure, or a shear rate.

(3) The prepared secondary particles are mixed with an amorphous carbon precursor.

The amorphous carbon precursor is not particularly limited as long as it is a material that forms a carbide. The precursor may include one or more of a phenolic resin, a furan resin, an epoxy resin, a polyacrylonitrile resin, a polyamide resin, a polyimide resin, a polyamideimide resin, synthetic pitch, petroleum pitch, coal pitch, and tar.

During the mixing, the natural graphite and the amorphous carbon in the final product-that is, the negative electrode active material-may be added to be present in the above-described weight ratio.

(4) The first negative electrode active material is obtained by calcining and thermally treating the mixture obtained by the mixing.

The thermal treatment may be performed at 2500°C or more, for example, from about 2500°C to about 3500 °C, for example, from about 2500 °C to about 3000 °C. Within the above ranges, the negative electrode active material including secondary particles satisfying the above-mentioned ratio can easily reach the above orientation degree, d002, and sphericity.

The thermal treatment may be maintained from about 1 hour to about 5 hours, for example, from about 1 hour to about 4 hours, from about 1 hour to about 3 hours, or from about 2 hours to about 3 hours.

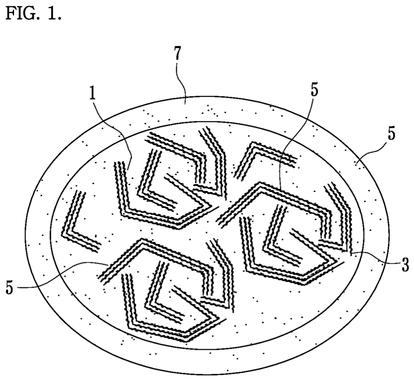

FIG. 1 is a schematic diagram of the first negative electrode active material according to some embodiments of the present disclosure.

Referring to FIG. 1, the first negative electrode active material includes natural graphite including secondary particles 3 in which a plurality of primary particles 1 are assembled; amorphous carbon 5 present on the surface of the primary particles, and a coating layer 7 that surrounds the secondary particle 3 and includes the amorphous carbon 5. Referring to FIG. 1, as the secondary particles 3 are assembled by spherically forming the primary particles 1 in a curved geometry, natural graphite has a lesser size and a dense internal structure, such that the internal pores may be minimized, side reactions with the electrolyte may be reduced, and the life cycle may be improved.

## Second negative electrode active material

The second negative electrode active material may be graphite. In some embodiments, the second negative electrode active material may be one or more of natural graphite and artificial graphite. In some embodiments, the second negative electrode active material is preferably artificial graphite.

The artificial graphite may have an average particle size D50 from about 10 $\mu$m to about 20 $\mu$m, for example, from about 13 $\mu$m to about 18 $\mu$m or from about 15 $\mu$m to about 20 $\mu$m. Within the above ranges, since the specific surface area does not increase significantly, side reactions with the electrolyte cannot increase, and boost charging performance cannot decrease.

The artificial graphite may have a maximum particle diameter from about 30 $\mu$m to about 40 $\mu$m.

In some embodiments, the artificial graphite has a pellet density less than that of the first negative electrode active material, for example, from about 1.1 g/cc to about 1.6 g/cc or from about 1.1 g/cc to about 1.5 g/cc.

In some embodiments, the artificial graphite may have a tap density less than that of the first negative electrode active material, for example, from about 0.5 g/cc to about 1.0 g/cc or from about 0.5 g/cc to about 0.9 g/cc.

In some embodiments, the artificial graphite may have a specific surface area of about 10 m$^2$/g or less, for example, from about 1 m$^2$/g to about 10 m$^2$/g. The specific surface area may be a BET specific surface area.

In some embodiments, the artificial graphite may have an orientation degree of about 90 or more, for example, from about 90 to about 100. The orientation degree may be measured by the above-described method.

The artificial graphite may have, but is not limited to, a spherical geometry.

The artificial graphite may include one or more of single particles, primary particles, secondary particles in which primary particles are assembled, and tertiary particles in which secondary particles are assembled.

In some embodiments, the secondary particles in which primary particles are assembled may also include a coating layer including amorphous carbon on their surfaces.

## Third negative electrode active material

The third negative electrode active material includes silicon nanoparticles, and an amorphous carbon coating layer disposed on the surface of the silicon nanoparticles.

In some embodiments, the third negative electrode active material is spherical, so it can be well dispersed throughout the negative electrode plate. Therefore, the expansion rate of the negative electrode plate during charging and discharging can be reduced. In addition, when the third negative electrode active material is mixed with crystalline carbon-that is, the first negative electrode active material-the spherical, third negative electrode active material can be more easily inserted into the crystalline carbon, and, thus, can be more easily dispersed throughout the negative electrode.

The sphericity (S), as expressed by Equation 1, of the third negative electrode active material may be from about 0.9 to about 1.0. Within the above range, it can be easy to reduce the expansion rate of the negative electrode plate during charging and discharging.

The sphericity of the third negative electrode active material according to some embodiments may be from about 0.92 to about 0.98 or from about 0.92 to about 0.95. When the sphericity of the third negative electrode active material falls within the range, the expansion rate of the negative electrode plate during charging and discharging can be more effectively inhibited.

The third negative electrode active material may have pores, and the pores may include mesopores. The mesopores may refer to pores with a pore size of from about 2 nm to about 50 nm. As the third negative electrode active material has mesopores, the effects of the negative electrode plate may be significant.

When the third negative electrode active material with the sphericity and the mesopores is mixed with the above-described first negative electrode active material and the above-described second negative electrode active material, it may be easy to simultaneously provide a long life cycle, high energy density, and a boost charging effect.

In some embodiments, the third negative electrode active material may also include macropores with a pore size of greater than about 50 nm. When the pore size exceeds 50 nm, pores are classified as macropores, the maximum value of macropores does not need to be limited, but the pore size may be 500 nm at most. It is desired that such macropores are included at 1 vol% or less, such as even about 0 vol% with respect to the total pore volume, which indicates that there may be substantially no macropores in the negative electrode active material.

In some embodiments, the third negative electrode active material may also include micropores with a pore size from about 0 nm to about 2 nm. The micropores in the negative electrode active material may correspond to the pores excluding mesopores based on a vol% of the total pores. Further, the micropores in the negative electrode active material may correspond to the pores excluding mesopores and macropores based on the vol% of the total pores.

The "pore size" used herein refers to the diameter of a pore when the cross-section of the pore is circular or the length of the longest major axis of the cross-section of a pore when the cross-section is not circular.

In some embodiments, the ratio of a mesopore volume to the total pore volume of the third negative electrode active material ([mesopore volume/total pore volume] x 100) of the third negative electrode active material may be from about 30% to about 70%. Within the above range, a long life cycle, a high energy density, and a boost charging effect may be improved. The ratio may be from about 30% to about 68%.

The total pore volume may be the total volume of pores that include mesopores and may be formed in the third negative electrode active material regardless of the pore size. In some embodiments, the total pore volume may be from about 0.001 cm³/g to about 0.01 cm³/g or from about 0.005 cm³/g to about 0.05 cm³/g.

Each of the total pore volume and mesopore volume may be quantitatively measured using Barrett-Joyner-Halenda (BJH) analysis equipment.

The third negative electrode active material may have a span value, as expressed by Equation 2 below, from about 1.1 to about 1.6:

[Equation 2]

$$\text{Span} = (D90 - D10)/D50.$$

In Equation 2, D10 is the particle size of particles of the third negative electrode active material with a cumulative volume of about 10 vol% in the particle size distribution, D50 is the particle size of particles of the third negative electrode active material with a cumulative volume of about 50 vol% in the particle size distribution (average particle size), and D90 is the particle size of particles of the third negative electrode active material with a cumulative volume of about 90 vol% in the particle size distribution.

Detailed methods of measuring D10, D50, and D90 are the same as described above.

In some embodiments, the span value may be from about 1.1 to about 1.55 or from about 1.1 to about 1.5.

When the span value of the third negative electrode active material falls within the above ranges, this value means that the third negative electrode active material contains virtually no fine particles. As the third negative electrode active material contains almost no fine particles, which have a size of about 1 μm or less and are typically amorphous, it may exhibit a small surface area, thereby reducing side reactions with an electrolyte and improving a life cycle of the rechargeable lithium battery.

In some embodiments, the third negative electrode active material have a small specific surface area, and the specific surface area may also be from about 0.5 m²/g to about 2 m²/g, from about 0.8 m²/g to about 2 m²/g, or from about 0.8 m²/g to about 1.5 m²/g. The specific surface area may be a value less than about 3 m²/g, which is the specific surface area of a conventional silicon-carbon composite as the negative electrode active material. The specific surface area may be a BET specific surface area.

The particle diameter of the silicon nanoparticles may range from about 10 nm to about 1,000 nm and, in some embodiments, may be from about 10 nm to about 200 nm, or from about 20 nm to about 150 nm. When the particle diameter of the silicon nanoparticles falls within the above ranges, excessive volume expansion during charging and discharging can be inhibited, and an interruption of a conductive path caused by particle fragmentation during charging and discharging can be prevented.

The silicon nanoparticles may be assembled into secondary silicon particles. According to some embodiments, the average particle size D50 of the secondary silicon particles may be from about 1 μm to about 15 μm. The average particle diameter D50 of the secondary silicon particles may be from about 1 μm to about 10 μm, for example, from about 6 μm to about 8 μm.

In the amorphous carbon coating layer, the amorphous carbon may be soft or hard carbon, mesophase pitch carbide, calcined coke, or a combination thereof.

A thickness of the amorphous carbon coating layer may be from about 1 nm to about 2 μm, from about 1 nm to about 500 nm, from about 10 nm to about 300 nm, or from about 20 nm to about 200 nm. When the thickness of the amorphous carbon coating layer is included within the above ranges, silicon volume expansion during charging and discharging may be well inhibited.

In the third negative electrode active material, an amount of the silicon nanoparticles may be from about 55 wt% to about 64 wt% or from about 58 wt% to about 62 wt% with respect to a total of 100 wt% of the third negative electrode active material. The amount of the amorphous carbon coating layer may be from about 36 wt% to about 45 wt% or from about 38 wt% to about 42 wt% with respect to a total of 100 wt% of the second negative electrode active material. Within the above ranges, the capacity of the negative electrode plate can be improved, and particle stability can increase.

The third negative electrode active material may further include a polymer layer located on the amorphous carbon coating layer.

The polymer layer may include a copolymer of polyvinyl alcohol and polyacrylic acid. The copolymer may be a crosslinked copolymer in which the polyvinyl alcohol and the polyacrylic acid are crosslinked. When the third negative electrode active material further includes a polymer layer, a volume expansion of the third negative electrode active material during charging and discharging may be more effectively inhibited.

As the polymer layer includes polyvinyl alcohol and polyacrylic acid, it is possible to prevent an electrolyte from penetrating into the third negative electrode active material during charging and discharging and, particularly, into the empty space-for example, pores, of the third negative electrode active material-thereby more effectively suppressing side reactions between the third negative electrode active material and the electrolyte.

The polyvinyl alcohol and the polyacrylic acid are aqueous polymers and are environment-friendly polymers.

In some embodiments, the polymer layer may include a copolymer of polyvinyl alcohol and polyacrylic acid, and the polyvinyl alcohol and the polyacrylic acid may be included as a crosslinked polymer or a crosslinked copolymer. The polymer of the polymer layer may be a crosslinked polymer of polyvinyl alcohol and polyacrylic acid. When the polyvinyl alcohol and the polyacrylic acid are crosslinked as a crosslinked polymer in the polymer layer, the crosslinked polymer does not dissolve in solvents, especially water, that are used during the manufacturing of the negative electrode active material layer. The above behavior of the crosslinked polymer allows the polymer layer to be maintained.

In the third negative electrode active material, when the entire silicon nanoparticles and amorphous carbon coating layer are referred to as a silicon-carbon composite, the amount of the polymer layer may be from about 0.01 parts by weight to about 3 parts by weight or from about 1.2 parts per weight to about 2.1 parts by weight with respect to 100 parts by weight of the silicon-carbon composite. When the amount of the polymer layer falls within the above ranges, better effects caused by the formation of the polymer layer can be achieved.

In the polymer layer, the mixing ratio of the polyvinyl alcohol and the polyacrylic acid may have a weight ratio from about 3:97 to about 40:60, from about 6:94 to about 40:60, or from about 6:94 to about 20:80. When the mixing ratio of the polyvinyl alcohol and the polyacrylic acid may be included within the above ranges, and the amount of the polyacrylic acid may be greater than that of the polyvinyl alcohol, lifespan characteristics of the rechargeable lithium battery may be further improved.

In some embodiments, the ratio of functional groups in the polyvinyl alcohol and the polyacrylic acid included in the polymer layer may also be appropriately adjusted. More specifically, a molar ratio of OH groups in the polyvinyl alcohol and COOH groups in the polyacrylic acid may be from about 5:95 to about 50:50 or from about 10:90 to about 30:70. When the functional group molar ratio satisfies the above ranges, the effects achieved by the formation of the polymer layer can be further improved, and lifespan characteristics may be further improved.

The second negative electrode active material according to some embodiments may be prepared through the following process.

Nano-scale silicon primary particles are prepared by grinding micrometer-scale silicon particles. The grinding process may be performed through a conventional process such as ball milling. In the grinding process, a dispersant may be used. As the dispersant, stearic acid, boron nitride (BN), MgS, polyvinylpyrrolidone (PVP), or a combination thereof may be used. The amount of dispersant used is sufficient as long as the amount of dispersant enables the milling process of silicon particles, but the present invention is not limited thereto.

The particle diameter of the silicon primary particles may be from about 1 nm to about 1000 nm, from about 10 nm to about 200 nm, or from about 20 nm to about 150 nm.

An obtained mixture after the grinding process is dried. The drying process may be performed using a spray drying process. By performing a spray drying process, a dry product containing spherical particles with a more uniform particle size may be formed, and a secondary particle in which the primary particles are assembled may also be formed. When the dry product is a spherical particle with a uniform particle size, a subsequently formed amorphous carbon layer may be more uniformly formed on the entire surface of the dry product.

The dry product and the amorphous carbon precursor are mixed.

As the amorphous carbon precursor, petroleum coke, coal coke, petroleum pitch, coal pitch, green coke, or a combination thereof may be used.

The obtained mixture then may be subjected to compression molding.

The compression molding may be performed to reduce pores in the negative electrode active material, thereby effectively inhibiting side reactions.

The compression molding process may be performed under a pressure sufficient for the acquired product-particularly, the negative electrode active material that is the final product-to maintain its spherical geometry, for example, from about 0 MPa to about 30 MPa, from about 0 MPa to about 200 MPa, or from about 5 MPa to about 20 MPa.

The compression molding process may be performed through cold isostatic pressing (CIP). When the compression molding is performed within the above pressure range, the spherical geometry of the negative electrode active material may be maintained, and pores may be suitably reduced, without generating fine particles.

Subsequently, the obtained compression molding product is carbonized. The carbonization process may be performed from about 600°C to about 1,000°C. In the carbonization process, the dispersant may be removed. In addition, the carbonization process may be performed in a $N_2$ atmosphere, a helium atmosphere, or a combination thereof. Through the carbonization process, the amorphous carbon precursor may be converted into amorphous carbon to surround a surface of the compression molding product, resulting in an amorphous carbon coating layer.

When the carbonization process is performed within the above-mentioned temperature range, an excessive growth of silicon (Si) particles and SiC formation may be inhibited, and an electrical conductivity of the amorphous carbon may be improved. In addition, some of the amorphous carbon may be introduced into the pores formed between the primary particles and may be present on the primary particle surface, thereby surrounding the surface. When the atmosphere of the carbonization process satisfies the above-mentioned conditions, silicon oxidation and SiC formation may be inhibited, and the amorphous carbon may be effectively formed, thereby reducing active material resistance.

Instead of the process of mixing the dry product and the amorphous carbon precursor, a vapor-phase coating process may be performed using the dry product and an amorphous carbon precursor gas. An amorphous carbon coating layer may be formed on the product surface without performing a separate carbonization process. Accordingly, after the vapor-phase coating process is performed, a compression process may be performed. Conditions for the compression process are as described above.

When the negative electrode active material layer according to some embodiments further includes a polymer layer, a prepared negative electrode active material (silicon-carbon composite) and a polymer solution are mixed, dried, and then thermally treated.

The polymer solution may be prepared by mixing polyvinyl alcohol and polyacrylic acid in a solvent, and the solvent may be water, ethanol, or a combination thereof.

The mixing ratio of the silicon-carbon composite and the polymer solution may be suitably adjusted so that the above-mentioned polymer amount and mixing ratio of the polyvinyl alcohol and the polyacrylic acid are achieved in the prepared negative electrode active material.

According to the thermal treatment process, through condensation between the OH group of the polyvinyl alcohol and the COOH group of the polyacrylic acid, the polyvinyl alcohol and the polyacrylic acid are crosslinked, thereby forming a crosslinked polymer.

The thermal treatment process may be performed from about 150°C to about 200°C. When the thermal treatment process is performed within the above temperature range, a condensation reaction, and a crosslinking reaction, may occur smoothly to form the crosslinked polymer.

Subsequently, a resulting thermally treated product is subjected to a classification process. The classification process may be performed using a sieve such that the span value (defined by Equation 2) of the negative electrode active material will be 1.1 to 1.6. The classification process may be performed to obtain an active material having a particle size such that a span value of the active material obtained from D10, D50, and D90 is from about 1.1 to about 1.6.

The negative electrode plate may further include a negative electrode active material (a fourth negative electrode active material) different from the above-described first negative electrode active material, second negative electrode active material, and third negative electrode active material.

The fourth negative electrode active material may further include a material that can reversibly intercalate/-deintercalate lithium ions, lithium metal, a lithium-metal alloy, a material capable of doping and dedoping with lithium, or a transition metal oxide.

The material that can reversibly intercalate/deintercalate lithium ions may be a carbon-based negative electrode active material, for example, crystalline carbon, amorphous carbon, or a combination thereof. The crystalline carbon may be graphite with a geometry that is amorphous, plate, flaky, or spherical, and the graphite may be fibrous natural graphite or artificial graphite. The amorphous carbon may be soft carbon, hard carbon, mesophase pitch carbide, or calcined coke.

The lithium-metal alloy may include lithium and a metal selected from Na, K, Rb, Cs, Fr, Be, Mg, Ca, Sr, Si, Sb, Pb, In, Zn, Ba, Ra, Ge, Al, and Sn.

As the material capable of doping and dedoping with lithium, a silicon-based negative electrode active material or a Sn-based negative electrode active material may be used. The silicon-based negative electrode active material may be Si, a silicon-carbon composite, $SiO_x$ ($0 < x < 2$), a Si-Q alloy (wherein Q is selected from an alkali metal, an alkaline earth metal, a Group 13 element, a Group 14 element [except Si], a Group 15 element, a Group 16 element, a transition metal, a rare-earth element, and a combination thereof), or a combination thereof. The Sn-based negative electrode active material may be Sn, $SnO_2$, a Sn-based alloy, or a combination thereof.

The silicon-carbon composite may be a composite of silicon and amorphous carbon. According to some embodiments, the silicon-carbon composite may be silicon particles whose surfaces are coated with amorphous carbon. The silicon-carbon composite may include secondary particles (core) in which silicon primary particles are assembled and an amorphous carbon coating layer (shell) is disposed on a surface of the secondary particles. The amorphous carbon may be located between the silicon primary particles, so that the silicon primary particles are coated with amorphous carbon. The secondary particles may be dispersed in the amorphous carbon matrix.

The silicon-carbon composite may further include crystalline carbon. The silicon-carbon composite may include a core including crystalline carbon and silicon particles, and an amorphous carbon coating layer disposed on a core surface of the silicon-carbon composite.

The silicon-based or Sn-based negative electrode active material may be mixed with a carbon-based negative electrode active material.

**Binder**

The electrode plate for a rechargeable lithium battery may further include a binder.

The binder may be included from about 0.5 wt% to about 5 wt% of the negative electrode plate.

The binder may adhere particles of the negative electrode active material to each other well and may adhere the negative electrode active material to the current collector well. A non-aqueous binder, an aqueous binder, a dry binder, or a combination thereof may be used.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When an aqueous binder is used as the negative electrode binder, a cellulose-based compound that can impart viscosity may be further included. As the cellulose-based compound, one or more of carboxymethyl cellulose, hydroxypropylmethyl cellulose, methyl cellulose, or an alkali metal salt thereof may be used. Na, K, or Li may be used as the alkali metal.

The dry binder is a polymer material that can be fiberized and may be, for example, polytetrafluoroethylene, polyvinylidene fluoride, a polyvinylidene fluoride-hexafluoropropylene copolymer, polyethylene oxide, or a combination thereof.

**Conductive material**

The negative electrode active material layer may further include a conductive material.

The conductive material may be included from about 0 wt% to about 5 wt% of the negative electrode plate.

The conductive material is used to impart conductivity to the electrode, and any electron-conductive material that does not cause chemical changes in the resulting cell can be used. In some embodiments, the conductive material may be a carbon-based material such as natural carbon, artificial carbon, carbon black, acetylene black, Ketjen black, carbon fibers, carbon nanofibers, or carbon nanotubes; a metal powder- or metal fiber-type metal-based material; a conductive polymer such as a polyphenylene derivative; or a mixture thereof.

The negative electrode plate for a rechargeable lithium battery according to some embodiments includes a negative electrode active material and a conductive material, wherein the negative electrode active material includes a mixture of a first negative electrode active material, a second negative electrode active material and a third negative electrode active material. The first negative electrode active material may include natural graphite containing secondary particles in which primary particles are assembled and an amorphous carbon coating layer surrounding the secondary particles. The first negative electrode active material may have an orientation degree of about 90 or less and a d002 from about 3.356 Å to about 3.360 Å, the second negative electrode active material includes graphite, and the third negative electrode active material may include silicon nanoparticles and an amorphous carbon coating layer disposed on the surface of the silicon nanoparticles and may have a sphericity from about 0.9 to about 1.0, and the conductive material may contain carbon nanotubes.

The negative electrode plate for a rechargeable lithium battery may include the above-mentioned mixture as a negative electrode active material and carbon nanotubes as a conductive material, thereby providing the silicon-based active material a high capacity retention, a high energy density, a boost charging effect, an improved fast charging life cycle, and a low expansion rate (swelling).

The negative electrode plate may include carbon nanotubes as a conductive material, thereby reducing a fast-charging time, extending the life cycle of the silicon-based active material, and reducing the swelling of the silicon-based active material, and, thus, increasing an energy density of the silicon-based active material.

When carbon nanotubes are included as a conductive material, the negative electrode plate may include the negative electrode active material mixture, thereby enhancing the effect of reducing the fast-charging time and extending the life cycle of the silicon-based active material.

The carbon nanotubes, as a conductive material, is a conductive material with a one-dimensional structure and form a conductive network, thereby maintaining the network among active materials during the charging and discharging of a battery, and suppressing battery degradation. In addition, the carbon nanotubes may provide the effects of reducing the fast-charging time, extending the life cycle of the silicon-based active material, and reducing the swelling of the second negative electrode active material, thereby increasing an energy density of a rechargeable lithium battery.

The carbon nanotubes may have an average diameter from about 0.5 nm to about 3 nm, for example, from about 1 nm to about 5 nm; an average length of about 5 $\mu$m or less, for example, from about 1 $\mu$m to about 2 $\mu$m; and a maximum length of about 20 $\mu$m or less. Within the above ranges, a fast-charging time reduction, an extended life cycle of the silicon-based active material, and a reduction in swelling of the silicon-based active material can be achieved.

"Average diameter" refers to the average diameter of the carbon nanotubes. "Diameter of a carbon nanotube" refers to the diameter of a carbon nanotube with a circular cross-section and also refers to the maximum length of a cross-section when the cross-section of the carbon nanotube is, for example, amorphous or not circular.

The carbon nanotube may have a specific surface area (SSA) from about 30,000 $m^2$/g to about 100,000 $m^2$/g, for example, from about 50,000 $m^2$/g to about 100,000 $m^2$/g. Within the above ranges, a negative electrode with high conductivity can be manufactured by reducing the powder resistance of a slurry for a negative electrode, which includes a mixture of the negative electrode active materials.

The SSA serves as a criterion for determining whether the negative electrode slurry prepared using a conductive material dispersion that is prepared using the carbon nanotubes with the specific surface area to be described below can provide low powder resistance. While SSA measurement can be easy for carbon nanotubes, for a conductive material dispersion containing carbon nanotubes, it is challenging to measure the SSA of dispersed carbon nanotubes in a carbon nanotube dispersion.

The SSA for the carbon nanotube dispersion may be calculated using a Malvern particle size analyzer.

The carbon nanotubes may be a mixture of one or more of single-walled carbon nanotubes and multi-walled carbon nanotubes. The carbon nanotubes are preferably single-walled carbon nanotubes.

The carbon nanotubes may have a specific surface area from about 240 $m^2$/g to about 280 $m^2$/g. Within the above range, a conductivity of the slurry containing the negative electrode active material may be increased.

In some embodiments, the carbon nanotubes may be included in an amount of about 95 wt% or more, for example, from about 95 wt% to about 100 wt% of the conductive material.

The conductive material-for example, the carbon nanotubes-may be contained from about 0.01 parts by weight to about 5 parts by weight, for example, from about 0.01 parts per weight to about 0.2 parts by weight or from about 0.03 parts per weight to about 0.05 parts by weight with respect to 100 parts by weight of the mixture of the negative electrode active materials. Within the above ranges, a fast-charging time reduction, an extended life cycle of the silicon-based active material, and a reduction in swelling of the silicon-based active material can be achieved.

The conductive material may be contained in the negative electrode plate from about 0.01 wt% to about 5 wt%, for example, from about 0.01 wt% to about 0.2 wt%. Within the above ranges, an increase in an energy density and an improvement in boost charging characteristics can be achieved, and an extended life cycle and a swelling reduction of the silicon-based active material can also be achieved. The conductive material-for example, the carbon nanotubes-may be contained in the negative electrode plate from about 0.03 wt% to about 0.05 wt%. Since the amount of the active material is not reduced within the above range, a battery capacity may not be reduced.

A negative electrode current collector may also be stacked on at least one surface of the negative electrode plate.

As the negative electrode current collector, any one of copper foil, nickel foil, stainless steel foil, titanium foil, nickel foam, copper foam, a conductive metal-coated polymer substrate, and a combination thereof may be used.

Some embodiments provide a rechargeable lithium battery that includes the negative electrode plate for a rechargeable lithium battery.

The rechargeable lithium battery may include the negative electrode plate for a rechargeable lithium battery and a positive electrode. The negative electrode plate may be substantially the same as described above.

<u>Positive electrode</u>

A positive electrode for a rechargeable lithium battery may include a current collector and a positive electrode active material layer on the current collector. The positive electrode active material layer may include a positive electrode active material and may further include a binder and/or a conductive material. The positive electrode may further include an additive that can serve as a sacrificial positive electrode.

<u>Positive electrode active material</u>

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

The following compounds represented by any one of the following Chemical Formulas may be used: $Li_aA_{1-b}X_bO_{2-c}D_c$ (0.90$\leq$a$\leq$1.8, 0$\leq$b$\leq$0.5, and 0$\leq$c$\leq$0.05); $Li_aMn_{2-b}X_bO_{4-c}D_c$ (0.90$\leq$a$\leq$1.8, 0$\leq$b$\leq$0.5, and 0$\leq$c$\leq$0.05); $Li_aNi_{1-b-}$

$_cCo_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_dX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal, excluding lithium, in the lithium transition metal composite oxide. The high-nickel-based positive electrode active material may be capable of realizing high capacity and can be applied to a high-capacity, high-density rechargeable lithium battery.

An amount of the positive electrode active material may be from about 90 wt% to about 99.5 wt% based on 100 wt% of the positive electrode active material layer. Amounts of the binder and the conductive material may be from about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, as non-limiting examples.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, or silver in a form of a metal powder or a metal fiber; a conductive polymer such as a polyphenylene derivative; or a mixture thereof.

Al may be used as the current collector, but the current collector is not limited thereto.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and caprolactone.

The ether-based solvent may include dibutyl ether, tetraglyme, diglyme, dimethoxyethane, 2-methyltetrahydrofuran, 2,5-dimethyltetrahydrofuran, and tetrahydrofuran. In addition, the ketone-based solvent may include cyclohexanone. The alcohol-based solvent may include ethanol and/or isopropyl alcohol, and the aprotic solvent may include nitriles such as R-CN (wherein R is a C2 to C20 linear, branched, or cyclic hydrocarbon group, a double bond, an aromatic ring, or an ether bond); amides such as dimethylformamide; dioxolanes such as 1,3-dioxolane or 1,4-dioxolane; or sulfolanes.

The non-aqueous organic solvents may be used alone or in combination of two or more non-aqueous organic solvents.

In addition, when using a carbonate-based solvent, a cyclic carbonate and a chain carbonate may be mixed and used, and the cyclic carbonate and the chain carbonate may be mixed in a volume ratio from about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$,

$LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOBP), and lithium bis(oxalato) borate (LiBOB).

The lithium rechargeable battery may further include a separator.

Separator

Depending on a type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, or a polypropylene/polyethylene/polypropylene four-layer separator.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but the inorganic material is not limited thereto.

The organic material and the inorganic material may be mixed in one coating layer, or a coating layer including an organic material and a coating layer including an inorganic material may be stacked.

The rechargeable lithium battery

The rechargeable lithium battery may be classified into cylindrical, prismatic, pouch, or coin-type batteries depending on their geometry.

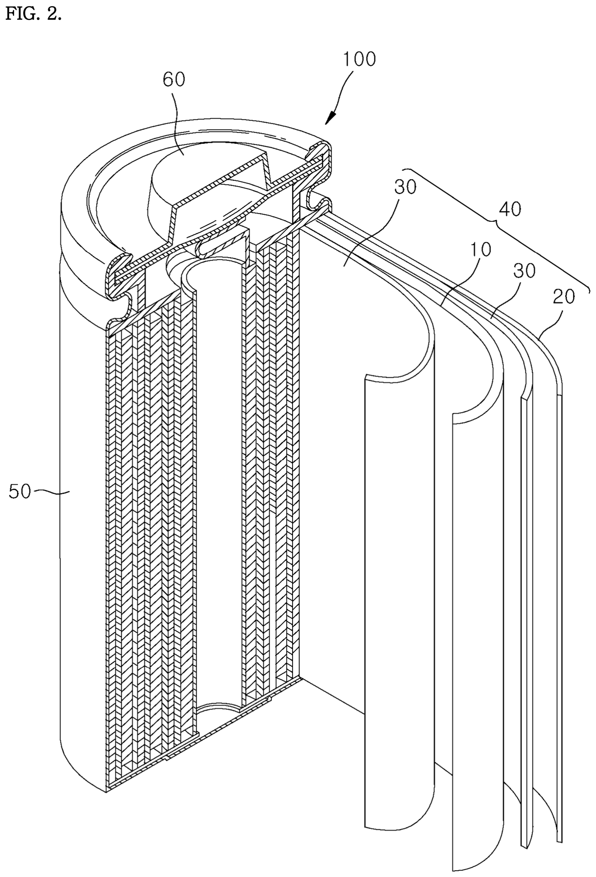

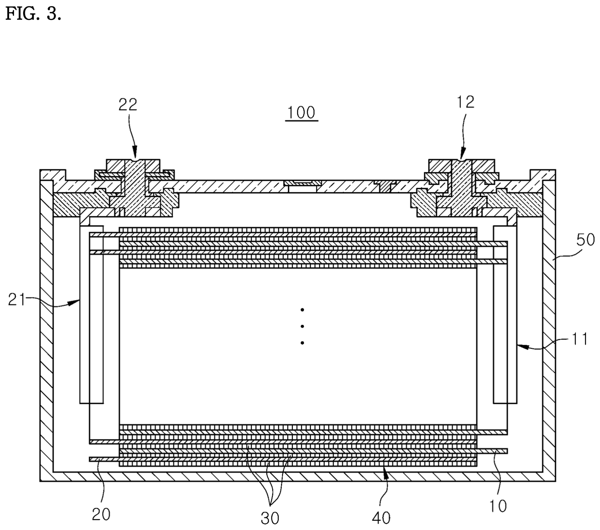

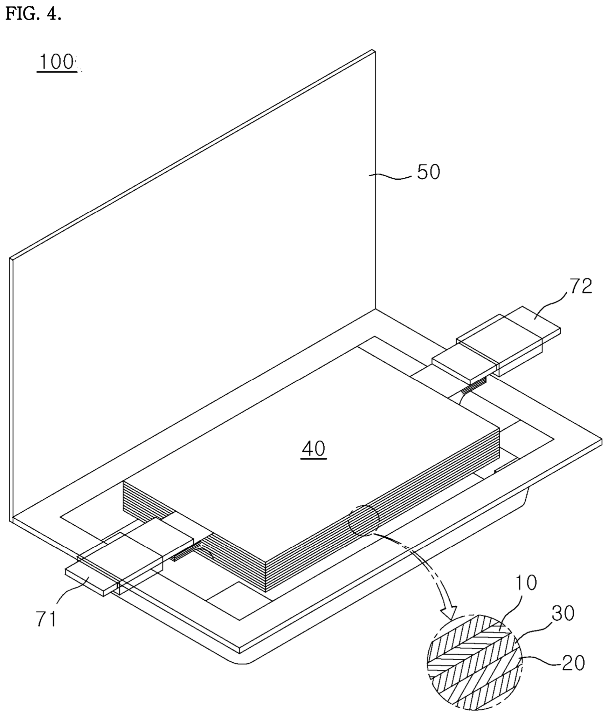

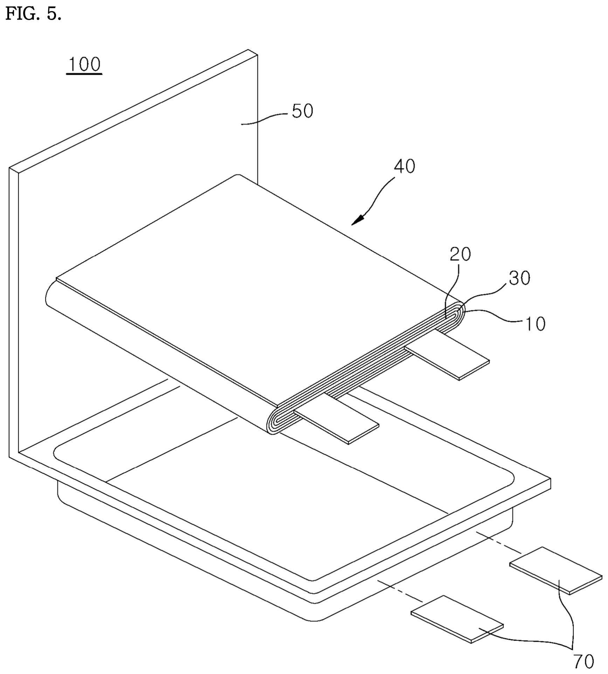

FIGS. 2 to 5 are schematic views, which each illustrate a rechargeable lithium battery according to some embodiments of the present disclosure. FIG. 2 shows a cylindrical battery, FIG. 3 shows a prismatic battery, and FIGS. 4 and 5 show pouch-type batteries. The rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealer 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be a positive electrode tab 71 and a negative electrode tab 72 serving as an electrical path for inducing the current formed in the electrode assembly 40 to the outside.

The rechargeable lithium battery according to some embodiments may be applied to automobiles, mobile phones, and/or various types of electric devices, as non-limiting examples.

An electronic device may contain the rechargeable lithium battery.

Hereinafter, examples and comparative examples of the present invention will be described. However, the following examples are merely exemplary, and the present invention is not limited thereto.

**Example 1**

**Preparation of first negative electrode active material**

A flaky natural graphite raw material having an average particle diameter D50 of about 120 $\mu$m was ground into primary particles having a geometry of a plate and a major axis length from about 20 $\mu$m to about 30 $\mu$m using an air jet milling method. The primary particles were assembled into secondary particles, which are spherical and have an average particle diameter D50 of about 7 $\mu$m, using spheroidization equipment. Pitch carbon was added to the secondary particles, mixed, and thermally treated at about 3000°C for 2 hours, thereby preparing a first negative electrode active material. The pitch carbon was added so that the natural graphite:amorphous carbon weight ratio in the first negative electrode active material was about 90:10.

**Second negative electrode active material**

Artificial graphite (spherical, average particle diameter D50: 15 $\mu$m, pellet density: 1.5 g/cc, tap density: 0.9 g/cc. specific surface area BET: 1.5 m$^2$/g, orientation degree: 100) was used as a second negative electrode active material. The artificial graphite is a secondary particle in which primary particles are assembled.

**Preparation of third negative electrode active material**

Primary particles with an average particle size D50 of about 100 nm were prepared by ball-milling silicon particles with an average particle size of about 8 $\mu$m. The primary particles and stearic acid were mixed in a weight ratio of about 20:80, and the mixture was spray-dried, thereby preparing secondary particles that had an average particle size D50 of about 7 $\mu$m and had pores.

The prepared secondary particles and petroleum pitch were mixed in a weight ratio of about 60:40, and the mixture was subjected to compression molding through a cold isostatic pressing method under a pressure of 10 MPa. Subsequently, the obtained compression-molding product was carbonized in a N$_2$ atmosphere at a temperature of about 1,000°C.

Then, the carbonized product was classified using a sieve so that the span value, according to Equation 2, was about 1.1, and the following were prepared: a negative electrode active material coated with soft carbon with a thickness of about 30 nm (which was a Si-C composite including secondary particles with an average particle size D50 of about 7 $\mu$m [in which primary Si particles with an average particle size D50 of about 100 nm were assembled]) and a soft carbon coating layer that coated the secondary particles. An amount of the Si nanoparticles was about 60 wt%, and an amount of the soft carbon was about 40 wt%, with respect to a total weight of the negative electrode active material. In addition, the D10, D50, and D90 of the negative electrode active material were measured using a particle analyzer (product name: LS 13 320, manufacturer: Beckman Coulter), allowing a calculation of the span value pursuant to Equation 2.

In addition, the sphericity obtained from the cross-sectional image that was obtained through CP-SEM using the Image J program was about 0.98. Moreover, the total pore volume and the mesopore volume of the prepared negative electrode active material were measured using BJH analysis equipment.

BJH measurement was performed using a BJH instrument (model name: ASAP 2020, manufacturer: Micromeritics) in a method of measuring the amount of adsorption/desorption on a sample as a function of pressure by varying the pressure from about 0 mmHg to about 950 mmHg using nitrogen gas at the temperature of liquid nitrogen (-198°C).

A third negative electrode active material that was prepared had a sphericity of about 0.98, a mesopore volume/total pore volume ratio of about 68%, a specific surface area of about 0.8 m$^2$/g, a total pore volume, as determined by, BJH of about 0.007 cm$^3$/g, a D10 of about 4.7 $\mu$m, a D50 of about 8.2 $\mu$m, and a D90 of about 13.7 $\mu$m.

**Mixture of the negative electrode active materials**

A mixture of the negative electrode active materials was prepared by mixing 47 parts by weight of the first negative electrode active material, 47 parts by weight of the second negative electrode active material, and 6 parts by weight of the third negative electrode active material based on 100 parts by weight of the mixture of negative electrode active materials.

A negative electrode active material slurry was prepared by mixing about 97.5 wt% of the prepared mixture of negative electrode active materials, about 1.5 wt% of styrene butadiene rubber as a binder, and about 1.0 wt% of carboxymethylcellulose as an additive in distilled water.

A copper current collector was coated with the negative electrode active material slurry, dried, and then rolled, thereby manufacturing a negative electrode plate.

A half-cell was manufactured using the negative electrode plate, a lithium metal counter electrode, and an electrolyte. The electrolyte was a mixed solvent of ethylene carbonate and dimethyl carbonate (3:7 volume ratio) in which 1 M LiPF$_6$ was dissolved.

**Example 2**

A first negative electrode active material was prepared in the same manner as in Example 1, except for changing the spheroidization conditions in Example 1. A negative electrode and a half-cell were manufactured in the same manner as in Example 1 using the first negative electrode active material that was prepared.

**Example 3**

A first negative electrode active material was prepared in the same manner as in Example 1, except for changing the spheroidization conditions in Example 1. A negative electrode and a half-cell were manufactured in the same manner as in Example 1 using the first negative electrode active material that was prepared.

**Examples 4 and 5**

Negative electrode plates and half-cells were manufactured in the same manner as in Example 1, except for changing a weight ratio of the components in Example 1, as shown in Table 1 below.

**Comparative Example 1**

A first negative electrode active material was prepared in the same manner as in Example 1, except that pitch carbon was not input in the preparation of a first negative electrode active material in Example 1. A negative electrode and a half-cell were manufactured in the same manner as in Example 1 using the first negative electrode active material that was prepared.

**Comparative Example 2**

A flaky natural graphite raw material with an average particle diameter D50 of about 120 $\mu$m or more was ground into primary particles with an average particle diameter D50 of about 120 $\mu$m by an air jet milling method. The primary particles were assembled into secondary particles with an average particle size of about 20 $\mu$m using spheroidization equipment. A first negative electrode active material was prepared by adding pitch carbon to the secondary particles and mixing them and thermally treating the resulting mixture at about 1200°C for about 2 hours. The pitch carbon was added so that the natural graphite:amorphous carbon weight ratio in the first negative electrode active material was about 90:10.
A negative electrode and a half-cell were manufactured in the same manner as in Example 1 using the first negative electrode active material that was prepared.

**Comparative Example 3**

A negative electrode plate and a half-cell were manufactured in the same manner as in Example 1, except that silicon oxide (C-2) was used instead of the third negative electrode active material in Example 1.

**Experimental Example 1: Evaluation of first negative electrode active material**

Pellet density (units: g/cc)

A pellet density was measured using a pellet density meter, Carver 4350.L (CARVER). After adding 1.0 g of each of the first negative electrode active materials of Examples and Comparative Examples to a mold, the density of a powder was measured while maintaining the mold under a pressure of about 2.0 tons for about 30 seconds.

Orientation degree:

An orientation degree was measured using a XRD analyzer, X'Pert Pro (PANalytical). A ratio of the diffraction peak intensity I (002) of the (002) plane to the diffraction peak intensity I (110) of the (110) plane was measured for each of the first negative electrode active materials of the Examples and the Comparative Examples by X-ray diffraction analysis using CuK$\alpha$ radiation.

d002 (units: Å)

d002 was measured using an XRD analyzer, X'Pert Pro (PANalytical). The interplanar spacing of the (002) plane was measured for each of the first negative electrode active materials of the Examples and the Comparative Examples by X-ray diffraction analysis using CuK$\alpha$ radiation.

Sphericity:

Sphericity was measured using a sphericity analyzer, Morphologi 4 (Malvern). For each of the first negative electrode active materials of the Examples and the Comparative Examples, the A value and the B value in Equation 1 were obtained, followed by calculating the sphericity according to Equation 1.

Hg cumulative pore volume (units: mL/g)

An Hg cumulative pore volume was measured for each of the first negative electrode active materials of the Examples and the Comparative Examples using an Hg Intrusion Porosimeter (AutoPore V (Micromeritics), Mercury intrusion porosimetry). The negative electrode active material was placed in a specialized sample cup, surrounded by mercury, and a pressure in the range from about 0.2 psi to about 60,000 psi was applied to intrude mercury into the negative electrode active material. The mercury porosity was then measured by monitoring a change in volume of mercury in a capillary stem reservoir. A size of pores that can be measured by the above-described method is from about 0.01 $\mu$m to about 100 $\mu$m, and, generally, in the negative electrode active material, pores with a size from about 0.01 $\mu$m to about 5 $\mu$m are consistent with pores of the active material.

**Experimental Example 2: Evaluation of battery characteristics**

Capacity (units: mAh/g) and charging rate (units: %)

The charge and discharge capacities were measured by charging and discharging the manufactured half-cells at 0.1 C. The measured discharge capacities are shown in Table 1 below, and the Coulombic efficiency (discharge capacity/charge capacity x 100%) was measured.

The manufactured half-cells were subjected to one cycle of 0.2 C constant current (CC)/constant voltage (CV) charging and 0.2 C discharging, one cycle of 0.5 C CC charging and 0.2 C discharging, one cycle of 1 C CC charging and 0.2 C discharging, and one cycle of 2 C CC charging and 0.2 C discharging, and then charging characteristics were calculated. The charging conditions were a 10 mV cutoff for the CC phase and a 15-hour cutoff for the CV phase, and the discharging condition was a 1.5 V cutoff. The charging characteristics were measured at each C-rate. The charging characteristics were expressed by calculating the ratio of the 2 C CC charge capacity to the 0.2 C CC charge capacity.

Energy density (units: Wh/L)

$$(\text{Cell capacity (Ah)} \times \text{Cell average voltage (V)}) / \text{Cell volume (L)}$$

The energy density is a value obtained by dividing the product of the discharge capacity obtained by discharging at a C-rate from 0.1 C to 1 C within the operating voltage range of a battery cell and the average voltage of the corresponding cell by the cell's volume.

Efficiency (units: %)

Efficiency was measured in the same manner as that of Capacity and SoC characteristics. It was calculated by 1st cycle discharge capacity/1st cycle charge capacity x 100 (formation discharge/formation charge x 100).

Expansion rate (swelling) (units: %)

Expansion rates were measured using a thickness monitoring system (TMS).

Each of the cells manufactured according to the Examples and the Comparative Examples was evaluated by charging and discharging (0.5 C/0.5 C) at about 45°C under the conditions including a charge voltage of 4.35 V and a discharge voltage of 2.8 V while continuously monitoring a cell thickness in real time during the charge and discharge cycles. The expansion rate was assessed by comparing the thickness increase after 50 cycles relative to the thickness after one cycle.

Expansion rate = (Cell thickness after 50th cycle - Cell thickness after 1st cycle)/Cell thickness after 1st cycle $\times$ 100

Table 1:

| | Example | | | | | Comparative Example | | |
|---|---|---|---|---|---|---|---|---|
| | 1 | 2 | 3 | 4 | 5 | 1 | 2 | 3 |

(continued)

| | | Example | | | | | Comparative Example | | |
|---|---|---|---|---|---|---|---|---|---|
| First negative electrode active material | Length of major axis of primary particles ($\mu$m) | 30 | 30 | 30 | 30 | 30 | 30 | 120 | 30 |
| | D50 of secondary particles ($\mu$m) | 7 | 10 | 5 | 7 | 7 | 7 | 20 | 7 |
| | Pellet density | 1.75 | 1.80 | 1.60 | 1.75 | 1.75 | 1.9 | 1.8 | 1.75 |
| | Orientation degree | 60 | 80 | 55 | 60 | 60 | 70 | 110 | 60 |
| | d002 (Å) | 3.3569 | 3.3567 | 3.3573 | 3.3569 | 3.3569 | 3.3558 | 3.3569 | 3.3569 |
| | Sphericity | 0.95 | 0.95 | 0.90 | 0.95 | 0.95 | 0.95 | 0.95 | 0.95 |
| | Hg cumulative pore volume (<1um, mL/g) | 0.035 | 0.041 | 0.037 | 0.035 | 0.035 | 0.158 | 0.065 | 0.035 |
| Third negative electrode active material | | C-1 | C-1 | C-1 | C-1 | C-1 | C-1 | C-1 | C-2 |
| Weight ratio | | 47:47:6 | 47:47:6 | 47:47:6 | 70.5:23.5:6 | 23.5:70.5:6 | 47:47:6 | 47:47:6 | 47:47:6 |
| Capacity (mAh/g) | | 435 | 440 | 430 | 425 | 430 | 437 | 435 | 410 |
| Charging rate (%) | | 47 | 47 | 47 | 49 | 46 | 40 | 46 | 43 |
| Energy density (Wh/L) | | 750 | 750 | 735 | 760 | 755 | 755 | 755 | 755 |
| Efficiency (%) | | 91 | 90 | 91 | 91 | 90 | 89 | 88 | 87 |
| Expansion rate (%) | | 5 | 6 | 5 | 3 | 6 | 9 | 9 | 10 |

In Table 1, C-1 is the silicon-carbon composite, C-2 is silicon oxide, and the weight ratio is represented by [first negative electrode active material]:[second negative electrode active material]:[third negative electrode active material] based on 100 parts by weight of negative electrode active material.

As shown in Table 1, the negative electrode plates for a rechargeable lithium battery of Examples simultaneously provide high energy density, a long life cycle, a boost charging effect, and improved expansion characteristics, and, thus, may exhibit excellent rechargeable lithium battery performance. Particularly, the negative electrode plates of the Examples had significantly low expansion rates. On the other hand, the negative electrode plates of Comparative Examples, which do not have either a first negative electrode active material or third negative electrode active material, had significantly high expansion rates.

**Example 6**

**Preparation of first negative electrode active material**

A flaky natural graphite raw material having an average particle diameter D50 of about 120 $\mu$m was ground into primary particles having a geometry of a plate and a major axis length of about 30 $\mu$m using an air jet milling method. The primary particles were assembled into secondary particles, which are spherical and have an average particle diameter D50 of about 7 $\mu$m, using spheroidization equipment. Pitch carbon was added to the secondary particles, mixed, and thermally treated at a temperature of about 3000°C for 2 hours, thereby preparing a first negative electrode active material. The pitch carbon was added so that the natural graphite:amorphous carbon weight ratio in the first negative electrode active material was about 90:10.

**Second negative electrode active material**

Artificial graphite (being spherical, having an average particle diameter D50 of 15 $\mu$m, having a pellet density of 1.5 g/cc, having a tap density of 0.9 g/cc, having a specific surface area BET of 1.5 m$^2$/g, and having an orientation degree of 100) was used as a second negative electrode active material. The artificial graphite is a secondary particle in which primary particles are assembled.

**Preparation of third negative electrode active material**

Primary particles with an average particle size D50 of about 100 nm were prepared by ball-milling silicon particles with an average particle size of about 8 $\mu$m. The primary particles and stearic acid were mixed in a weight ratio of about 20:80, and the mixture was spray-dried, thereby preparing secondary particles that had an average particle size D50 of about 7 $\mu$m and pores.

The prepared secondary particles and petroleum pitch were mixed in a weight ratio of about 60:40, and the mixture was subjected to compression molding through a cold isostatic pressing method under a pressure of 10 MPa. Subsequently, the obtained compression-molding product was carbonized in a N$_2$ atmosphere at a temperature of about 1,000°C.

Then, the carbonized product was classified using a sieve so that the span value of Equation 2 was 1.1, and the following were prepared: a negative electrode active material coated with soft carbon with a thickness of about 30 nm (which was a Si-C composite including secondary particles with an average particle size D50 of about 7 $\mu$m [in which primary Si particles with an average particle size D50 of about 100 nm were assembled]) and a soft carbon coating layer that coated the secondary particles. The amount of the Si nanoparticles was about 60 wt%, and the amount of the soft carbon was about 40 wt%, with respect to the total weight of the negative electrode active material. In addition, the D10, D50, and D90 of the negative electrode active material were measured using a particle analyzer (product name: LS 13 320, manufacturer: Beckman Coulter), and a span value was obtained according to Equation 2.

In addition, a sphericity value of 0.98 was obtained from a cross-sectional image of the secondary particles via CP-SEM methods using the Image J program. Moreover, the total pore volume and the mesopore volume of the prepared negative electrode active material were measured using BJH analysis equipment.

BJH measurement was performed using a BJH instrument (model name: ASAP 2020, manufacturer: Micromeritics) in a method of measuring the amount of adsorption/desorption on a sample as a function of pressure by varying the pressure from about 0 mmHg to about 950 mmHg using nitrogen gas at the temperature of liquid nitrogen (-198°C).

The third negative electrode active material that was prepared had a sphericity of about 0.98, a mesopore volume/total pore volume ratio of about 68%, a specific surface area of about 0.8 m$^2$/g, a total pore volume (as determined by BJH) of about 0.007 cm$^3$/g, a D10 of about 4.7 $\mu$m, a D50 of about 8.2 $\mu$m, and a D90 of about 13.7 $\mu$m.

**Mixture of the negative electrode active materials**

A mixture of the negative electrode active materials was prepared by mixing 47 parts by weight of the first negative electrode active material, 47 parts by weight of the second negative electrode active material, and 6 parts by weight of the third negative electrode active material based on 100 parts by weight of the mixture of negative electrode active materials.

A negative electrode active material slurry was prepared by mixing about 97.5 wt% of the prepared mixture of negative electrode active materials, about 0.04 wt% of single-wall carbon nanotubes (SWCNTs) (D-1) as a conductive material, and about 2.46 wt% of styrene butadiene rubber as a binder in distilled water.

A copper current collector was coated with the negative electrode active material slurry, dried and then rolled, thereby manufacturing a negative electrode plate.

A half-cell was manufactured using the negative electrode plate, a lithium metal counter electrode, and an electrolyte. The electrolyte was a mixed solvent of ethylene carbonate and dimethyl carbonate (3:7 volume ratio) in which 1M LiPF$_6$ was dissolved.

**Example 7**

A first negative electrode active material was prepared in the same manner as in Example 6, except for changing the spheroidization conditions in Example 6. A negative electrode and a half-cell were manufactured in the same manner as in Example 6 using the first negative electrode active material that was prepared.

## Example 8

A first negative electrode active material was prepared in the same manner as in Example 6, except for changing the spheroidization conditions in Example 6. A negative electrode and a half-cell were manufactured in the same manner as in Example 6 using the first negative electrode active material that was prepared.

## Examples 9 and 10

Negative electrode plates and half-cells were manufactured in the same manner as in Example 6, except for changing the weight ratio of components in Example 6, as shown in Table 2 below.

## Example 11

A negative electrode plate and a half-cell were manufactured in the same manner as in Example 6, except that denka black (carbon black)(D-2) was used, instead of carbon nanotubes, as a conductive material.

## Experimental Example 3: Evaluation of first negative electrode active material

Pellet density (units: g/cc); orientation degree; d002 (units: Å); sphericity: and Hg cumulative pore volume (units: mL/g) were evaluated in the same manner as in Experimental Example 1.

## Experimental Example 4: Evaluation of battery characteristics

Capacity (units: mAh/g) and charging rate (units: %)

The charge and discharge capacities were measured by charging and discharging the manufactured half-cells at 0.1 C. The measured discharge capacities are shown in Table 1, and the Coulombic efficiency (discharge capacity/charge capacity x 100%) was measured.

The manufactured half-cells were subjected to one cycle of 0.2 C constant current (CC)/constant voltage (CV) charging and 0.2 C discharging, one cycle of 0.5 C CC charging and 0.2 C discharging, one cycle of 1 C CC charging and 0.2 C discharging, and one cycle of 2 C CC charging and 0.2 C discharging, and then charging characteristics were calculated. The charging conditions were a 10 mV cutoff for the CC phase and a 15-hour cutoff for the CV phase, and the discharging condition was a 1.5 V cutoff. The charging characteristics were measured at each C-rate. The charging characteristics were expressed by calculating the ratio of the 2 C CC charge capacity to the 0.2 C CC charge capacity.

Fast-charging time (units: s):

Fast-charging time refers to the time required to charge a battery of (state of charge) SOC from about 8% to about 80% by constant current charging, and it was evaluated by identifying a charging pattern that does not reach the upper voltage limit of 4.2 V during charging.

Fast charging life cycle (units: cycles):

One cycle is defined as charging of SOC from about 8% to about 80% and discharging at a constant current of about 0.33 C to a voltage of about 2.8 V, based on the determined fast-charging time, and the large cell was evaluated through cycling until a SOH (state of health) is about 80%.

Expansion rate (swelling) (units: %)

An expansion rate was measured using a thickness monitoring system (TMS).

Each of the cells manufactured according to the Examples and the Comparative Examples was evaluated by charging and discharging (0.5 C/0.5 C) at about 45°C under the conditions including a charge voltage of 4.35 V and a discharge voltage of 2.8 V while continuously monitoring the cell thickness in real time during the charge and discharge cycles. The expansion rate was assessed by comparing a thickness increase after 50 cycles relative to the thickness after one cycle.

Expansion rate = (Cell thickness after $50^{th}$ cycle - Cell thickness after $1^{st}$ cycle) /Cell thickness after $1^{st}$ cycle $\times$ 100

Table 2:

| | | Example | | | | | |
|---|---|---|---|---|---|---|---|
| | | 6 | 7 | 8 | 9 | 10 | 11 |
| First Negative electrode active material | Length of major axis of primary particles ($\mu$m) | 30 | 30 | 30 | 30 | 30 | 30 |
| | D50 of secondary particles ($\mu$m) | 7 | 10 | 5 | 7 | 7 | 7 |
| | Pellet density | 1.75 | 1.80 | 1.60 | 1.75 | 1.75 | 1.75 |
| | Orientation degree | 60 | 80 | 55 | 60 | 60 | 60 |
| | d002 (Å) | 3.3569 | 3.3567 | 3.3573 | 3.3569 | 3.3569 | 3.3569 |
| | Sphericity | 0.95 | 0.95 | 0.90 | 0.95 | 0.95 | 0.95 |
| | Hg cumulative pore volume (<1um, mL/g) | 0.035 | 0.041 | 0.037 | 0.035 | 0.035 | 0.035 |
| Third negative electrode active material | | C-1 | C-1 | C-1 | C-1 | C-1 | C-1 |
| Conductive material | | D-1 | D-1 | D-1 | D-1 | D-1 | D-2 |
| Amount of conductive material (wt%) | | 0.04 | 0.04 | 0.04 | 0.04 | 0.04 | 0.04 |
| Weight ratio | | 47:47:6 | 47:47:6 | 47:47:6 | 70.5:23.5:6 | 23.5:70.5:6 | 47:47:6 |
| Capacity (mAh/g) | | 435 | 437 | 433 | 440 | 430 | 435 |
| Charging rate (%) | | 47 | 42 | 50 | 49 | 45 | 41 |
| Fast-charging time (s) | | 900 | 1080 | 780 | 900 | 900 | 1320 |
| Fast charging life cycle (cycles) | | 1800 | 1600 | 2100 | 1950 | 1700 | 1100 |
| Expansion rate (%) | | 5 | 6 | 6 | 3 | 6 | 12 |

In Table 2, C-1 represented the silicon-carbon composite, D-1 represented the carbon nanotubes, D-2 represented denka black (carbon black), and the weight ratio was represented as [first negative electrode active material]:[second negative electrode active material]:[third negative electrode active material] based on 100 parts by weight of negative electrode active material.

As shown in Table 2, the negative electrode plates for a rechargeable lithium battery of the Examples had a large capacity, a high SoC, a short fast-charging time, a low expansion rate, and a long fast charging life cycle, thereby simultaneously exhibiting a high energy density, a high-rate charging characteristics, and improved electrode expansion properties.

Although the preferred embodiments of the present invention have been described above, the present invention is not limited thereto, and various modifications may be made to the above-described embodiments and to the embodiments shown in the drawings.

**Claims**

1. A negative electrode plate for a rechargeable lithium battery, the negative electrode plate comprising a negative electrode active material, the negative electrode active material comprising:

   a first negative electrode active material comprising:

   secondary particles comprising natural graphite, the secondary particles being an assembly of primary particles; and
   a first coating layer comprising amorphous carbon, the first coating layer surrounding each of the secondary particles,

the first negative electrode active material having an orientation degree of 90 or less and having a d002 ranging from about 3.356 Å to about 3.360 Å;

a second negative electrode active material comprising graphite; and

a third negative electrode active material having a sphericity from about 0.9 to about 1.0, the third negative electrode active material comprising:

silicon nanoparticles; and

a second coating layer comprising amorphous carbon, the second coating layer surrounding each of the silicon nanoparticles.

2. The negative electrode plate of claim 1, wherein the first negative electrode active material has a Hg cumulative pore volume from about 0.01 mL/g to about 0.06 mL/g and/or a pellet density from about 1.60 g/cc to about 1.80 g/cc, and/or a sphericity of greater than or equal to 0.85.

3. The negative electrode plate of claim 1 or 2, wherein a ratio of a major axis length of the primary particles to an average particle size D50 of the secondary particles is from about 2 to about 10 and or wherein a major axis length of each of the primary particles ranges from about 10 $\mu$m to about 200 $\mu$m.

4. The negative electrode plate of any of claims 1 to 3, wherein each of the primary particles has a flaky geometry, and wherein each of the secondary particles has a substantially spherical geometry.

5. The negative electrode plate of any of claims 1 to 4, wherein an average particle size D50 of the secondary particles is less than or equal to about 30 $\mu$m.

6. The negative electrode plate of any of claims 1 to 5, wherein the first negative electrode active material further comprises a third coating layer comprising amorphous carbon, the third coating layer surrounding each of the primary particles.

7. The negative electrode plate of any of claims 1 to 6, wherein the amorphous carbon comprises soft carbon, hard carbon, mesophase pitch carbide, or calcined coke.

8. The negative electrode plate of any of claims 1 to 7, wherein a weight ratio between natural graphite and the amorphous carbon in the first negative electrode active material is from about 90:10 to about 75:25 with respect to 100 parts by weight of a total of natural graphite and the amorphous carbon in the first negative electrode active material.

9. The negative electrode plate of any of claims 1 to 8, wherein the third negative electrode active material has pores including mesopores, preferably wherein a percent ratio of a mesopore volume to a total pore volume of the third negative electrode active material is from about 30% to about 70%.

10. The negative electrode plate of any of claims 1 to 9, wherein a span value is expressed by the following equation:

$$\text{Span} = (D90\text{-}D10)/D50,$$

wherein D10 is a particle size of particles of the third negative electrode active material with a cumulative volume of about 10 vol% in a particle size distribution of the third negative electrode active material,

wherein D50 is an average particle size of particles of the third negative electrode active material with a cumulative volume of about 50 vol% in the particle size distribution,

wherein D90 is the particle size of particles of the third negative electrode active material with a cumulative volume of about 90 vol% in the particle size distribution, and

wherein the third negative electrode active material has a span value from about 1.1 to about 1.6.

11. The negative electrode plate of any of claims 1 to 10, wherein

i) the third negative electrode active material comprises the silicon nanoparticles in an amount from about 55 wt% to about 64 wt% with respect to a total of 100 wt% of the third negative electrode active material, and wherein the third negative electrode active material comprises amorphous carbon in an amount from about 36 wt% to about 45 wt% with respect to a total of 100 wt% of the third negative electrode active material, and /or

ii) wherein the third negative electrode active material further comprises a polymer layer surrounding the second coating layer, preferably wherein the polymer layer comprises polyvinyl alcohol or polyacrylic acid.

12. The negative electrode plate of any of claims 1 to 11, wherein the negative electrode active material comprises the first negative electrode active material in an amount from about 20 wt% to about 75 wt% of the negative electrode active material, the second negative electrode active material in an amount from about 20 wt% to about 75 wt% of the negative electrode active material, and the third negative electrode active material in an amount from about 1 wt% to about 20 wt% of the negative electrode active material.

13. The negative electrode plate of any of claims 1 to 12, wherein graphite of the second negative electrode active material is artificial graphite having an average particle size D50 from about 10 $\mu$m to about 20 $\mu$m, a pellet density from about 1.1 g/cc to about 1.6 g/cc, a specific surface area less than or equal to about 10 $m^2$/g, and an orientation degree greater than or equal to about 90.

14. The negative electrode plate of any of claims 1 to 13, further comprising a conductive material, preferably wherein the conductive material comprises carbon nanotubes, and/or wherein the negative electrode plate comprises the conductive material in an amount from about 0.01 wt% to about 5 wt% of the negative electrode plate.

15. A rechargeable lithium battery comprising:

the negative electrode plate of any of claims 1 to 14; and
a positive electrode.

FIG. 1.

FIG. 2.

FIG. 3.

FIG. 4.

100

50

72

40

71

10

30

20

FIG. 5.

Europäisches
Patentamt

European
Patent Office

Office européen
des brevets

## EUROPEAN SEARCH REPORT

**Application Number**

EP 25 21 9140

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 228 025 A1 (SAMSUNG SDI CO LTD [KR]) 16 August 2023 (2023-08-16) | 1-8,10, 12,13,15 | INV. H01M4/36 |
| Y | * paragraph [0024] - paragraph [0060] * * paragraph [0089] - paragraph [0099] * ----- | 9,11,14 | H01M4/133 H01M4/134 H01M4/38 |
| Y | JP 2013 222551 A (SUMITOMO BAKELITE CO) 28 October 2013 (2013-10-28) * page 5, paragraph 4 - page 6, paragraph 3 * * page 17, paragraph 5 - paragraph 6 * ----- | 9,14 | H01M4/587 H01M4/62 |
| Y | US 2021/143411 A1 (LEE DAE-HYEOK [KR] ET AL) 13 May 2021 (2021-05-13) * paragraph [0101] - paragraph [0104] * ----- | 11 | |
| A | EP 4 266 397 A1 (SAMSUNG SDI CO LTD [KR]) 25 October 2023 (2023-10-25) * the whole document * ----- | 1-15 | |
| A | US 2019/355971 A1 (KIM YOUNG-MIN [KR]) 21 November 2019 (2019-11-21) * the whole document * ----- | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 14 April 2026 | Iglesias van M., H |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 21 9140

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | | Publication date | Patent family member(s) | | Publication date |
|---|---|---|---|---|---|
| EP 4228025 | A1 | 16-08-2023 | EP | 4228025 A1 | 16-08-2023 |
| | | | KR | 20230119523 A | 16-08-2023 |
| | | | US | 2023253553 A1 | 10-08-2023 |
| JP 2013222551 | A | 28-10-2013 | NONE | | |
| US 2021143411 | A1 | 13-05-2021 | KR | 20210055506 A | 17-05-2021 |
| | | | US | 2021143411 A1 | 13-05-2021 |
| | | | US | 2024332512 A1 | 03-10-2024 |
| EP 4266397 | A1 | 25-10-2023 | EP | 4266397 A1 | 25-10-2023 |
| | | | JP | 2024515948 A | 11-04-2024 |
| | | | KR | 20230030409 A | 06-03-2023 |
| | | | US | 2024120461 A1 | 11-04-2024 |
| | | | US | 20260074187 A1 | 12-03-2026 |
| | | | WO | 2023027431 A1 | 02-03-2023 |
| US 2019355971 | A1 | 21-11-2019 | CN | 110504420 A | 26-11-2019 |
| | | | KR | 20190132026 A | 27-11-2019 |
| | | | US | 2019355971 A1 | 21-11-2019 |
| | | | US | 2024097102 A1 | 21-03-2024 |
| | | | US | 2025105256 A1 | 27-03-2025 |

EPO FORM P0459

For more details about this annex : see Official Journal of the European Patent Office, No. 12/82